# EUROPEAN PATENT APPLICATION

(11) **EP 4 311 222 A1**
(43) Date of publication of application: **24.01.2024**
(21) Application number: 22185548.9
(22) Date of filing: 18.07.2022
(51) Int. Cl.: H04N 5/232, H04N 5/067, G09G 5/12

(54) **MEDICAL IMAGING SYSTEM AND METHOD FOR CONTROLLING THE SAME**

(71) Applicant: BHS Technologies GmbH, 6020 Innsbruck (AT)
(72) Inventor: BURGER, Gregor, 6176 Völs (AT)
(74) Representative: Prüfer & Partner mbB Patentanwälte · Rechtsanwälte

(57) **Abstract**

The present invention relates to a medical imaging system (1, 1') comprising:
an imaging device (10) configured to record and/or process images of an object in accordance with a predetermined imaging frame rate in a predetermined operating mode,
a display device (20) configured to display the recorded and/or processed images of the imaging device (10) in accordance with a predetermined display frame rate in accordance with a scan-out time and v-blank timing, and
a control device (30) configured to control the transfer of the recorded and/or processed images of the imaging device (10) to the display device (20), wherein
the control device (30) is further configured to control the recording and/or transfer of images in dependence on the v-blank timing of the display device (20) in accordance with the display frame rate.

## Description

The present invention relates to a medical imaging system and a method for controlling such medical imaging system. The present invention also relates to a computer program product and a storage medium for performing or passing on the method.

Medical imaging systems, such as medical microscopes connected to a head-mounted display, provide double or triple buffering schemes to display images. Accordingly, such systems apply at least one extra frame latency to avoid dropping a single frame from the imaging device. For example, a head-mounted display comprises a 60 Hz display that refreshes images about every 17 ms, while capturing of images and a respective image processing may take about 20 ms. A respective scan-out of processed images to the display happens almost immediately. In a best case scenario, the processed image is received by the display directly after a refresh of images such that latency is 27 ms (20 ms + 17 ms = 27 ms). However, in a worst case scenario, the latency may be up to 54 ms due to double buffering (20 ms + 17 ms + 17 ms = 54 ms). The average latency is usually somewhere in between.

In view of the above, it is an object of the present invention to provide a medical imaging system with the capability of a reduced latency or glass-to-glass latency, respectively.

The object is solved by the subject matters of the independent claims. Advantageous modifications are subject to the dependent claims.

According to the present invention, a medical imaging system comprises an imaging device configured to record and/or process images of an object in accordance with a predetermined imaging frame rate, a display device configured to display the recorded and/or processed images of the imaging device in accordance with a predetermined display frame rate in accordance with a scan out timer and v-blank timing, and a control device configured to control the recording and/or transfer of the recorded and/or processed images of the imaging device to the display device. Further, the control device is configured to control the recording and/or transfer of images in dependence on the v-blank timing of the display device in accordance with the display frame rate.

For example, the imaging device may be a camera, which records images at a substantially constant exposure time and processes the recorded images according to a substantially constant processing time. In such configuration, the imaging frame rate corresponds to the number of available recorded and processed images per unit time depending on the image recording and processing time. As the imaging device may only record images, the imaging frame rate may correspond to the imaging recording rate, which may be dependent on the set exposure time and/or other technical constraints and/or predetermined user settings. In principle, the predetermined imaging frame rate refers to the number of images or image frames, respectively, available from the imaging device per unit time. The substantially constant exposure time and/or substantially constant processing time may refer to camera settings as operating mode. Such camera settings or operating modes, respectively may vary due to user and/or other control inputs, such as to set different zoom levels, working distances or brightness settings. Further, depending on the size and the bandwidth of the recorded and optionally processed image or image frame, respectively, a transfer time may be additionally considered with respect to the imaging frame rate. The transfer time may be assumed to be constant. Alternatively or in addition, the image processing may be executed by another device such as the control device, the display device or the intermediate device as described later. In principle, the process of recording, processing and displaying images should be substantially constant. Accordingly, the transfer time for images from the imaging device to the display of the display device should be substantially constant. As per the following description of the display device, a display frame rate is set by the respective display device and may not be adaptable. Therefore, the imaging frame rate and/or the transfer time and/or transfer rate are adapted and/or controlled to correspond to the display frame rate such that the imaging device provides images with an imaging frame rate or transfer rate equal or more than a respective display frame rate.

Similarly, the display device, such as a head-mounted display device, provides a display frame rate that represents the number of images to be displayed per unit time or an image refreshing rate, respectively. In such context, the v-blank time as further addressed below, is the time between the end of the concrete image scan-out of an image to be displayed and the beginning of the next scan-out of the next image. The v-blank time is also known as vertical blanking interval (VBI) or just as vertical interval. Accordingly, the display frame rate is the rate of the scan-out time and v-blank time for each display frame.

According to the present invention, the control device is configured to control the recording and/or transfer of images, e.g. the transfer of images recorded and/or processed by imaging device to the display device. In other words, the control device is configured to control the point in time, at which the display device receives the respective image for a display scan-out. Specifically, the control device is configured to control the recording and/or transfer of images such that the respective image is received by the display device within the v-blank time. The v-blank time may be a predetermined time at a predetermined v-blank rate. However, the v-blank time and/or the v-blank rate may be also subject to changes due to, for example, technical constraints and/or variable settings. The controlled recording and/or transfer of images to the display device by the control device in dependence on the v-blank time allows the display device to display the images with the next refresh or display scan-out, respectively. In other words, the control device is configured to control the record and/or transfer the images such that the image frame to be displayed is ready to be scanned-out within the v-blank time. Thereby, it is possible to achieve a reduced latency corresponding to the image recording time or the image recording and processing time, e.g. a latency of below one frame, e.g. about 20 ms or less with respect to a 50 Hz display rate. Furthermore, the inventive principle allows the use of a single buffer with respect to the display device as the respective image frames arrive at the display device shortly before a scan-out by the display device. In such single buffer configuration, the recording and/or transfer of images is controlled such that the active frame buffer is overwritten within the v-blank time. However, the present invention is not restricted to a single buffer display device, and may also apply the inventive concept of a just-in-time delivery of images in a double buffering configuration, wherein a respective image is written into a second buffer or back buffer, respectively, and a first buffer as front buffer and the second buffer are flipped within the v-blank time to change the second buffer from the back buffer state to the front buffer state, and to change the first buffer from the front buffer state to the back buffer state.

Irrespective of the buffer configuration, the control of the recording and/or transfer of images to the display device or a respective scan-out unit thereof is controlled in dependence on the v-blank time. The control may be based on a known or estimated scan-out time and/or v-blank time in accordance with the respective display device or respective operating settings if the display device. The v-blank timing refers to the point in time, at which the v-blank time starts and/or ends, and may also comprise the v-blank time in terms of its duration. The v-blank timing in terms of the point in time, at which the v-blank time starts, may be represented by a v-sync signal, which may be received by the control device to control the recording and/or transfer of images. Due to the v-sync signal, the scan-out time may not be required to be known, since the signal allows to trigger the recording and/or transfer of images and respective settings. For example, the start of the image recording by the camera may be preponed or postponed or the exposure time may be increased or decreased in dependence on receiving the v-sync signal.

In some embodiments, the control device is configured to set a predetermined recording rate and/or transfer rate and or to set a predetermined timing of recording and/or transferring images.

The predetermined recording rate and/or transfer rate to the display device may be based on a predetermined display frame rate. For example, the display frame rate is 60 Hz, wherein the v-blank time rate is also 60 Hz. Consequently, the predetermined recording rate may be also set to 60 Hz to allow the recorded images to arrive at the display device within the v-blank time. The predetermined recording rate and/or transfer rate may therefore depend on technical specifications of the display device.

The predetermined recording rate and/or transfer rate may be a constant recording rate and/or transfer rate in terms of a constant frequency but may also be represented by a function or algorithm. For example, the predetermined recording rate and/or transfer rate may be set as the display frame rate as per the above. However, as there may be some accumulated offset over time due to slight variations or inaccuracies, the predetermined recording rate and/or transfer rate may be a constant frequency over a predetermined period of time with an offset after the predetermined period of time before starting the next sequence with the constant frequency. Such offset may also be applied in the event that the predetermined recording rate and/or transfer rate corresponds to the display frame rate or v-blank rate but provides an offset to the v-blank time, i.e. that the images arrive at the display device before the v-blank time has started or are at least not completely transferred when the v-blank time ends.

Alternatively or in addition, the control device may be configured to set a predetermined timing of recording and/or transferring images in dependence of a v-blank timing. In such configuration, the control device may be configured to receive a v-sync signal representative of the beginning of the v-bank time to control the timing of recording and/or transferring images accordingly. The control device may also be configured to set the predetermined timing of recording and/or transferring of images only once and then controls the recording and/or transfer in accordance with the predetermined recording rate and/or transfer rate. In such configuration, the v-blank timing has to be controlled only once, at least as long as a potential deviation between the images transferred and the images displayed does not exceed a certain threshold.

Preferably, the control device is configured to adjust the predetermined recording rate and/or transfer rate and/or the predetermined timing of recording and/or transferring images.

Such adjustment may be performed during a display sequence, e.g. if images are not properly displayed, and/or before and/or after a display sequence, e.g. if the display device is replaced with a display device with other display frame rate and/or v-blank time settings or if the display device is operated at such different settings. The adjustment ability allows the predetermined recording rate and/or transfer rate and/or the predetermined timing of recording and/or transferring images to be adapted to different devices, settings and/or tolerances. In particular, the adjustment of the predetermined recording rate and/or transfer rate and/or the predetermined timing of recording and/or transferring images allows to correct the predetermined recording rate and/or transfer rate and/or the predetermined timing of recording and/or transferring images if the transfer of images runs out of the v-blank time. The adjustment of the predetermined recording rate and/or transfer rate and/or the predetermined timing of recording and/or transferring images may be executed by user settings and/or automatically due to monitoring of the synchronism of the predetermined recording rate and/or transfer rate and/or the predetermined timing of recording and/or transferring images during the v-blank time, an example of which is set out below.

Preferably, the medical imaging system comprises a monitoring device configured to detect a tearing of the images displayed by the display device, and the control device is configured to adjust the predetermined recording rate and/or transfer rate and/or the predetermined timing of recording and/or transferring images when a tearing is detected.

Tearing or screen tearing, respectively, is an undesired effect when displaying images. Such tearing occurs when the transfer of images to the display device is at least partially not within the v-blank time, i.e. the predetermined recording rate and/or transfer rate and/or the predetermined timing of recording and/or transferring images is not synchronized with the display frame rate or display refreshing rate, respectively. Accordingly, a tear line is visible in the displayed image, which contains portions of subsequent image frames. In other words, tearing is a result of an image frame transferred too early or too late such that the image frame is at least not totally transferred to the display device within the v-blank time for a complete display scan-out.

Even though this occurs quite seldom when the predetermined recording rate and/or transfer rate and/or the predetermined timing of recording and/or transferring images and the display frame rate and v-blank timing are sufficiently synchronized, e.g. once about every 10 s, monitoring the occurrence of tearing allows a corresponding adjustment of the predetermined recording rate and/or transfer rate and/or the predetermined timing of recording and/or transferring images for realignment. Due to the tearing being an effect of slight off-sets of the scan-out with respect to the v-blank time, tearing may appear - at least at the beginning - mainly at the very top or bottom of the respective display. Consequently, such tearing may not significantly disturb the visual impression. This provides the control device with sufficient time. e.g. half a second, to adjust the predetermined recording rate and/or transfer rate and/or the predetermined timing of recording and/or transferring images and/or to run a best-fit adjustment mode, in which several control scenarios are executed or simulated for a respective setting selection.

For example, if a tearing as consequence of a late transfer is detected by the monitoring device, the control device may be configured to accelerate the next timing of recording and/or transferring images but to maintain the recording rate and/or transfer rate afterwards on the same level as before. Such countermeasure relates to intermediate timing off-sets, e.g. to compensate for accumulated deviations over time. Alternatively, the control device may be configured to increase the recording and/or transfer rate with or without accelerating the next timing or recording and/or transferring images. Such countermeasure may assume a systematic substantially equal deviation.

In some embodiments, the control device is operatively connected to the imaging device to control the predetermined recording rate and/or transfer rate and/or the predetermined timing of recording and/or transferring images of the imaging device.

The operative connection may be implemented by a wire or wireless connection. Further, the control device may be an external control device, part of the imaging device or part of the display device in operative connection for a recording and/or transfer control. Due to the operative connection, the control device is configured to control the predetermined recording rate and/or transfer rate and/or the predetermined timing of recording and/or transferring images of the imaging device as direct transfer of recorded and/or processed images to the display device.

For example, the control device may set the display frame rate as predetermined recording rate according to a constant exposure time in an operating mode of a camera as imaging device. The respectively recorded images are transferred at the same predetermined transfer rate as the predetermined recording rate to the display device. If the images are further processed before being transferred to the display device, the predetermined recording rate may be adapted in accordance with the processing time to set the display frame rate as predetermined transfer rate to allow the recorded and processed image to arrive at the display device to be scanned-out within the v-blank time. In other words, the control device is configured to consider the recording time and processing time to set the predetermined recording rate and transfer rate.

If the predetermined recording rate and/or transfer rate correspond(s) to the v-blank rate but is offset with respect to the v-blank timing, the recorded or recorded and processed images arrive too early or too late. In such event, the predetermined recording and/or transfer rate may be adjusted temporarily. For example, if the images arrive too late, the predetermined recording and/or transfer rate is increased until the image is transferred during the v-blank time. Afterwards, the recording and/or transfer rate is reset to the v-blank rate to comply with the v-blank rate.

Alternatively, the control device may receive a v-sync signal corresponding to the point in time, at which the v-blank time starts. The control device may then trigger the recording and/or processing of images at the predetermined recording rate or in alignment with the predetermined transfer rate.

In a further alternative, the control device may be configured to control the recording and/or transfer of images in dependence of the v-sync signal or any other trigger signal representative of the v-blank timing. In other words, the recording and/or transfer of images may be controlled without any predetermined recording rate and/or transfer rate but based on trigger signals.

Preferably, the control device is configured to control the predetermined timing of recording and/or transferring images as a predetermined delay time with respect to the v-blank timing.

For example, the control device receives the v-sync signal from the display device or another signal indicative of the beginning or end of the v-blank time as timing signals. The vsync signal indicates that displaying of an old image frame is finished and that the v-blank time starts. The control device is configured to delay the trigger signal to start recording and/or transferring images for a predetermined amount of time with respect to the vsync signal. Accordingly, the timing for the images to arrive to be displayed is adjustable in accordance with the predetermined amount of time or predetermined delay time, respectively. If the image arrives too early, the predetermined delay time may be increased. In turn, if the image arrives too late, the delay time may be decreased.

Further, if the delay time falls below zero for an arrival of images in the v-blank time, the predetermined delay time is applied to trigger the recording and/or transfer of an image not for the next display frame but for the frame following the next frame. In other words, the vsync signal or another signal representative of the v-blank timing of an earlier frame is used to trigger the recording and/or transfer for a later frame. In turn, if the delay time exceeds a scan-out time and v-blank time, the vsync signal or another signal representative of the v-blank timing of a later frame is used to trigger the recording and/or transfer for an earlier frame.

In some embodiments, the medical imaging device comprises an intermediate device operatively arranged between the imaging device and the display device to receive images by the imaging device and to transmit the received images to the display device, and the control device is operatively connected to intermediate device to control the transfer rate of the intermediate device.

The intermediate device may be understood as a buffer between the imaging device and the display device. Since the intermediate device and the control device may be configured as interconnected components, imaging systems comprising conventional image devices and display devices may be retrofitted by such intermediate device controlled by the control device to provide a recording and/transfer of images in accordance with v-blank timing. In alternative embodiments, the intermediate device may comprise the control device. In such configuration, the control device as part of the intermediate device may control the transfer rate of the intermediate device, a transfer rate of the imaging device and/or the imaging frame rate. In principle, as previously described, the control device is intended to adapt the reception timing of images to be displayed by the display device by controlling the imaging device, the optional intermediate device and/or any other device involved in the process from recording of images until being displayed to arrive for a scan-out on the display within the v-blank time.

Preferably, the intermediate device is configured to at least store and/or process images received from the imaging device.

For example, if the imaging frame rate of the imaging device is higher than the transfer rate to transfer images to the display device, the intermediate device may store respective images to be scanned-out next. In such context, the intermediate device and/or the control device may also be configured to replace the next image to be scanned-out by a more actual image received by the imaging device if the transfer of the actual image to the intermediate device is completed before the transfer of the next image.

Alternatively or in addition, the intermediate device may be configured to process an image received by the imaging device. Accordingly, the imaging device may continue to record images, while the step of processing the recorded image is transferred to the intermediate device. The intermediate device may also provide image processing capabilities superior or at least different to the image processing capabilities of the imaging device.

In some embodiments, the display device is or comprises at least a head-mounted display device.

The use of a head-mounted display device as display device provides images in a relatively small distance to an eye or the eyes of a user. In the event of tearing, which is assumed to start at the very top or bottom, the visual impression on the display or displays of the head-mounted display is not significantly disturbed. Thus, there may be sufficient time for the control device to adjust the scan-out rate.

In some embodiments, the imaging device is or comprises at least a robotic microscope.

Robotic microscopes are often used in sensitive medical procedures, which require superior image quality to support such procedures best. Accordingly, the medical imaging system comprising a robotic microscope as imaging device provide the benefit of allowing improved image quality due to the capability of reducing latency to enhance the field of applications. Furthermore, since the robotic microscope may be configured to provide rapid movements, e.g. in accordance to a change of a viewing direction, a reduced latency allows a quicker visual response in accordance with such movements. In particular, an operator and/or instruments used during a procedure to recorded may be subject to movements, which are magnified in accordance with the magnification of the displayed images. This may result in quite rapid movements in the respective images.

According to another aspect, the present invention relates to a method for controlling a medical imaging system as described above. The method comprises the steps of:
recording an image by the imaging device, and
transferring the recorded image to the display device, wherein
a recording rate and/or transfer rate and/or a timing of recording and/or transferring the recorded image to be displayed by the display device is controlled in dependence on the v-blank timing of the display device, in particular by the control device.

The method steps are executed in the order given above. The recorded image may be directly transferred from the imaging device to the display device, e.g. in accordance with control device to control the recording and/or transfer rate of the imaging device to the display device. The transfer of the recorded images is carried out in synchronism with the v-blank timing, i.e. the recorded images are transferred to be scanned-out within the v-blank time.

In some embodiments, the method further comprises the step of processing the recorded image, preferably before the image is transferred to the display device.

The processing of the recorded image may comprise different image settings, such as contrast, brightness, magnification or the like. The recorded image may be processed by the imaging device, the intermediate device as described previously and/or the display device. If at least some image processing is carried out by the display device, the display device comprises an image processing unit and the transfer of processed images from the image processing unit of the display device to a display of the display device is synchronized with the v-blank time. However, the image processing may be advantageously completed before the image is transferred to the display device, which may allow to reduce complexity of the display device and its respective control.

In some embodiments, a tearing of images displayed by the display device is monitored, and the recording rate and/or transfer rate and/or the timing of recording and/or transferring images is adjusted, in particular increased or decreased, upon detection of a respective tearing.

As described previously, if a tearing due a transfer of an image frame being too late is detected, the recording rate and or transfer rate may be increased accordingly. Alternatively or in addition, the timing of recording and/or transferring images may be adjusted. In turn, if a tearing due to a transfer of an image frame being too early is detected, the recording rate and/or transfer rate may be decreased. Alternatively or in addition, the timing of recording and/or transferring images may be adjusted. Further, alternatively or in addition, the scan-out rate may be adjusted by adjustment of a respective function or algorithm. Such adjustment may relate to parameters of a respective function or algorithm, or the function or algorithm as such.

In principle, any method features and/or device features representative of method steps as described with respect to medical imaging system also relate to further embodiments of the method and are therefore applicable thereto. In turn, any method features and/or device features representative of a feature of the medical imaging system as described with respect to the method also relate to further embodiments of the medical imaging system and are therefore applicable thereto.

According to another aspect, the present invention relates to a computer program product having code means, which, when being executed on a data processing unit, cause it to execute the method as described above.

The data processing unit is preferably a data processing unit provided in the above-described medical imaging system, such as the control device or another control device. Thus, also an existing device may be adapted to perform the method described above.

According to another aspect, the present invention relates to a storage medium for being read by a data processing unit, wherein the storage medium comprises a computer program product as described above.

Thereby, the present invention may be passed on. The storage medium preferably comprises an USB stick, a memory card and/or a CD-ROM.

The following is a description of preferred embodiments of the invention with reference to the accompanying drawings.

In detail:
Fig. 1 is a schematic illustration of a medical imaging system according to a first exemplary embodiment of the present invention; and
Fig. 2 is a schematic illustration of a medical imaging system according to a second exemplary embodiment of the present invention.

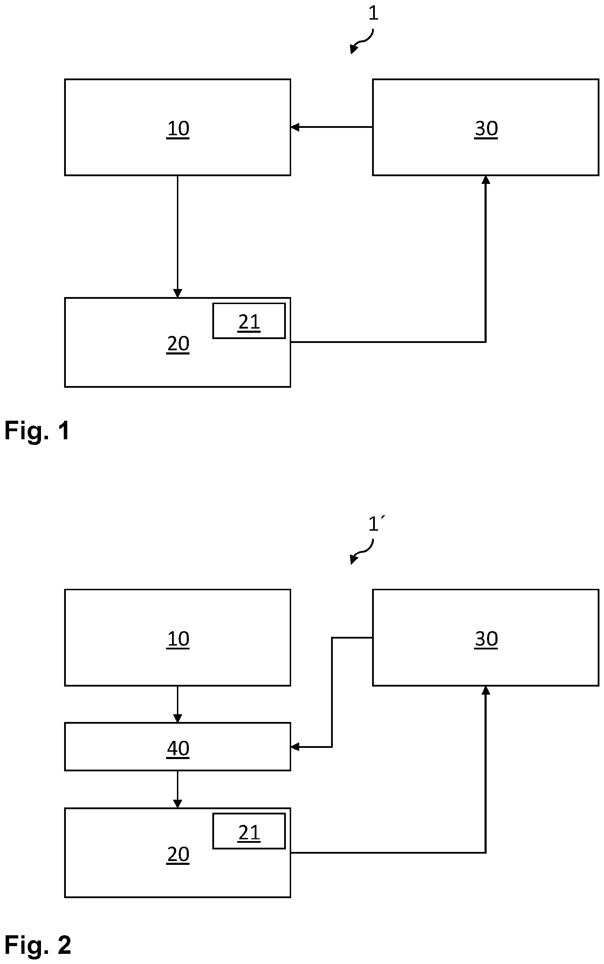

Fig. 1 is a schematic illustration of a medical imaging system 1 according to a first exemplary embodiment of the present invention. The medical imaging system 1 comprises an imaging device 10, a display device 20, and a control device 30.

In the exemplary embodiment, the imaging device 10 is configured to record and process images of an object to be displayed by the display device 20. The time to record and process an image is set to about 17 ms in accordance with an imaging frame rate of 60 Hz. Irrespective of the imaging frame rate, each of the processed images should be transferred to the display device 20 to be scanned-out within a respective v-blank time of the display device 20. Here, the display device 20 is a single buffer display device and provides a display frame rate of 60 Hz with a v-blank time of 2 ms and scan-out time of images to be displayed of 15 ms to create a respective image on the display device 20.

To control the transfer of recorded and processed images from the image display device 10 to the display device 20 within the v-blank time, the control device 30 is operatively connected to the imaging device 10. The control device 30 is configured to set and control a transfer rate from the imaging device 10 to the display device 20 in accordance with the imaging frame rate. Further, the control device is configured to start the transfer rate within the v-blank time. To identify the v-blank time of the display device, the control device 30 is also operatively connected to the display device 20, transferring a vsync signal to the control device 30. However, in alternative embodiments, the control device may initiate different calibration sequences with different start timings and/or transfer rates until, for example, no tearing or other undesired effect occurs over at least a predetermined period of time. Controlling the transfer rate may allow to consider other image processing procedures or durations that have to be taken into account before the image is finally transferred to the display device 20 to be displayed.

Further, the display device 20 comprises a monitoring device 21 to detect a tearing of the image displayed. If a tearing is detected, a respective signal is provided to the control device 30 to adjust the transfer rate of the imaging device 10 accordingly. The monitoring device 21 may be used for the above identification of the v-blank time and/or also during a display sequence during normal operation to allow the control device 30 to adjust the transfer rate to compensate for deficiencies. In alternative embodiments, the monitoring device 21 may be comprised by the control device 30 or may be a separate device operatively connected at least to the control device 30 to provide the control device with respective control signals. Tearing may be detected by the monitoring device 21 in accordance with an image monitoring, which detects image artifacts representative of a tearing. Alternatively, the monitoring device receives a v-sync signal and compares the v-sync signal timing with a transfer timing of the images to be displayed to detect an offset falling below or exceeding a predetermined threshold. Accordingly, a monitoring of tearing may be either implemented by hardware and/or software.

According to a variant, the control device 30 may not or not only control the transfer rate but directly sets the imaging frame rate to the display frame rate, e.g. 60 Hz. This may be accomplished by decreasing the exposure time and therefore the predetermined recording time to comply with an imaging frame rate of 60 Hz. In this configuration, the transfer rate corresponds to the imaging frame rate. However, based on the respective times that may be required for recording, processing and/or transferring images, the control device may control or trigger each of these operations independently or in accordance with a common control approach considering each respective contribution to the imaging frame rate.

Fig. 2 is a schematic illustration of a medical imaging system 1' according to a second exemplary embodiment of the present invention. The medical imaging system 1'of the second embodiment differs from the medical imaging system 1 of the first embodiment by further comprising an intermediate device 40. The same reference signs in Figs. 1 and 2 denote the same devices. A description of such devices is therefore omitted for the second embodiment as long as no different or further functionality is provided.

The intermediate device 40 is operatively connected between the imaging device 10 and the display device 20. The intermediate device 40 is configured as a storage device to store the images recorded and processed by the imaging device 10. However, in alternative embodiments, the intermediate device 40 may also be configured to process the recorded images by the imaging device 10 or to further process the recorded and processed images by the imaging device 10. In the second exemplary embodiment according to Fig. 2, the control device is operatively connected to the intermediate device 40, instead of being operatively connected to the imaging device 10, to control the transfer rate of the intermediate device 40 to transfer the recorded and processed images of the imaging device 10 stored in the intermediate device 40. The functionality of controlling the transfer rate of the intermediate device 40 by the control device 30 corresponds to the control of the transfer rate of the imaging device 10 according to the first embodiment.

The invention is not limited to the embodiments described above. Rather, by combining, omitting and/or exchanging individual features, further subject matters may be formed, which also fall within the claimed scope of protection. For example, the control device 30 may not be a separate device but may be comprised by the display device 20, the imaging device 10 or the intermediate device 40. Further, the control device 30 may be configured to process images instead or in addition to the image processing by the imaging device 10. In principle, the control device 30 is configured to control at least one setting of at least one device contributing to the imaging frame rate and/or transfer rate to allow images to be received by the display device 20 to be displayed within the v-blank time. If the imaging frame rate and/or the transfer rate are set to the display frame rate, the concrete timing for transferring images in accordance with the set imaging frame rate and/or transfer rate to the display device to arrive within the v-blank time may be controlled by the control device receiving the v-sync signal as trigger signal and/or by monitoring tearing effects. If tearing effects are identified, the imaging frame rate and/or the transfer rate may be increased or decreased until the image frame arrives at the display device in synchronism with the v-blank time. Then, the imaging frame rate and/or the transfer rate may be reset to the display frame rate.

### List of reference signs

- 1, 1': medical imaging system
- 10: imaging device
- 20: display device
- 21: monitoring device
- 30: control device
- 40: intermediate device

## Claims

1. Medical imaging system (1, 1') comprising:
an imaging device (10) configured to record and/or process images of an object in accordance with a predetermined imaging frame rate in a predetermined operating mode,
a display device (20) configured to display the recorded and/or processed images of the imaging device (10) in accordance with a predetermined display frame rate in accordance with a scan-out time and v-blank timing, and
a control device (30) configured to control the recording and/or transfer of the recorded and/or processed images of the imaging device (10) to the display device (20), wherein
the control device (30) is further configured to control the recording and/or transfer of images in dependence on the v-blank timing of the display device (20) in accordance with the display frame rate.

2. Medical imaging system (1, 1') according to claim 1, wherein
the control device (30) is configured to set a predetermined recording rate and/or transfer rate and/or to set a predetermined timing of recording and/or transferring images.

3. Medical imaging system according (1, 1') to claim 2, wherein
the control device (30) is configured to adjust the predetermined recording rate and/or transfer rate and/or the predetermined timing of recording and/or transferring images.

4. Medical imaging system (1, 1') according to claim 3, wherein
the medical imaging system (1) comprises a monitoring device (21) configured to detect a tearing of the images displayed by the display device (20), and wherein
the control device (30) is configured to adjust the predetermined recording rate and/or transfer rate and/or the predetermined timing of recording and/or transferring images when a tearing is detected.

5. Medical imaging system (1) according to any one of the preceding claims, wherein
the control device (30) is operatively connected to the imaging device (10) to control the predetermined recording rate and/or transfer rate and/or the predetermined timing of recording and/or transferring images of the imaging device (10).

6. Medical imaging system (1) according any one of the claims 2 to 5, wherein
the control device (30) is configured to control the predetermined timing of recording and/or transferring images as predetermined delay time with respect to the v-blank timing.

7. Medical imaging system (1') according to any one of the preceding claims, wherein
the medical imaging device (1') comprises an intermediate device (40) operatively arranged between the imaging device (10) and the display device (20) to receive images by the imaging device (10) and to transmit the received images to the display device, and wherein
the control device (30) is operatively connected to intermediate device (40) to control the transfer rate of the intermediate device (40).

8. Medical imaging system (1') according to claim 7, wherein
the intermediate device (40) is configured to at least store and/or process images received from the imaging device (10).

9. Medical imaging system (1, 1') according to any one of the preceding claims, wherein
the display device is or comprises at least a head-mounted display device.

10. Medical imaging system (1, 1') according to any one of the preceding claims, wherein
the imaging device (10) is or comprises at least a robotic microscope.

11. Method for controlling a medical imaging system (1) according to any one of the claims 1 to 10, comprising the steps of:
recording an image by the imaging device (10), and
transferring the recorded image to the display device (20), wherein
a recording rate and/or transfer rate and/or a timing of recording and/or transferring the recorded image to be displayed by the display device (20) is controlled in dependence on the v-blank timing of the display device (20), in particular by the control device (30).

12. Method according to claim 11, wherein
the method further comprises the step of processing the recorded image, preferably before the image is transferred to the display device (20).

13. Method according to claim 11 or 12, wherein
a tearing of images displayed by the display device (20) is monitored, and wherein
the recording rate and/or transfer rate and/or the timing of recording and/or transferring images is adjusted, in particular increased or decreased, upon detection of a respective tearing.

14. Computer program product having code means, which, when being executed on a data processing unit, cause it to execute the method according to any one of the claims 11 to 13.

15. Storage medium for being read by a data processing unit, wherein the storage medium comprises a computer program product according to claim 14.
